# EUROPEAN PATENT APPLICATION

(11) **EP 3 031 836 A1**
(43) Date of publication of application: **15.06.2016**
(21) Application number: 14833834.6
(22) Date of filing: 31.07.2014
(51) Int. Cl.: C08F 279/02, C08L 51/04, C08L 69/00

(54) **PHOSPHAZENE-CONTAINING RUBBER GRAFT COPOLYMER AND THERMOPLASTIC COMPOSITION THEREOF**

(30) Priority: 05.08.2013 JP 2013162658
(71) Applicant: Kaneka Corporation, Osaka-shi, Osaka 530-8288 (JP)
(72) Inventor: TAKAMIDO, Seigo, Takasago-shi Hyogo 676-8688 (JP)
(74) Representative: Vossius & Partner Patentanwälte Rechtsanwälte mbB
(86) International application number: PCT/JP2014/070248
(87) International publication number: WO 2015/019945

(57) **Abstract**

The present invention relates to a rubber graft copolymer comprising a rubber polymer part and a graft polymer part, wherein the rubber graft copolymer comprises an essential constituent unit derived from a phosphazene derivative having a polymerizable functional group. The rubber graft copolymer of the present invention functions as the impact modifier while maintaining the flame retardance and the heat resistance of the thermoplastic resin.

## Description

### TECHNICAL FIELD

The present invention relates to a polymer capable of improving the impact resistance as a modifier while maintaining the flame retardance and the heat resistance of a thermoplastic resin, especially a polycarbonate resin.

### BACKGROUND ART

Polycarbonate resins have been used widely as electric and electronic parts, office automation equipments, domestic articles or building materials due to the various properties such as excellent impact resistance, heat resistance, and electronic chracteristics. Although polycarbonate resins have higher flame retardance than that of polystyrene resins, further improvement of the flame retardance has been studied by adding each kind of flame retardants in the field of electric and electronic parts, office automation equipments and the like requiring higher flame retardance. For example, a flame retardant polycarbonate resin composition containing a halogen based flame retardant, or a phosphorus based flame retardant has been proposed so as to give the flame retardance to an aromatic polycarbonate resin. Although a halogen based flame retardant containing halogen elements such as bromine and chloride is excellent in the flame retardance, there are problems that the halogen based flame retardant is thermally decomposed at the time of molding processing to produce a hydrogen halide, the metal mold is corroded, and the heat stability of the resin composition is lowered and the like. In addition, there is a problem that a harmful substance is produced at the time of combustion.

The phosphorus based flame retardant includes a phosphoric acid ester compound, red phosphorus, a phosphazene compound and the like. The phosphoric acid ester compound has been used widely due to the relatively good flame retardance. However, there is a problem that the heat resistance or the impact resistance of the composition is lowered because the flame retardant is added in a large amount in order to obtain the high flame retardance. In addition, although it is known that an elastomer is added so as to provide the composition with the impact resistance, the flame retardance is lowered by the addition of the elastomer, so that the balance between the impact resistance and the flame retardance can be hardly satisfied at high level.

In addition, in the case where red phosphorus is used to give the flame retardant to the composition or the molded article, there are problems such as the coloration of the composition and the smell produced at the time of molding processing, although high flame retardant effects are obtained by the addition of the red phosphorus in a small amount. On the contrary, a phosphazene compound has been attracted recently because the phosphazene compound does not relatively have an adverse effect on the mechanical property or heat property, and the moldability.

Patent Document 1 discloses a polymer polymerized with phosphazene compounds having multiple polymerizable functional groups as "flame retardant, flame retardant resin composition, molded article, and electronic part". However, Patent Document 1 does not disclose a copolymer obtained by polymerizing a phosphazene compound to a rubber graft copolymer having a core shell structure, so that the thermoplastic resin composition did not satisfy the balance between the flame retardance and the impact resistance at high level.

Patent Document 2 discloses a flame retardant polycarbonate resin composition comprising a polycarbonate resin and a rubber reinforced styrene resin and a phosphazene compound. However, the phosphazene compound is not copolymerized with the rubber reinforced styrene resin, and is merely compounded in the composition, so that the balance between the flame retardance and the impact resistance was insufficient.

### PRIOR ART DOCUMENTS

### PATENT DOCUMENT

Patent Document 1: Japanese Unexamined Patent Application Publication No. 2001-335703
Patent Document 2: Japanese Unexamined Patent Application Publication No. 2007-045906

### SUMMARY OF THE INVENTION

### PROBLEMS TO BE SOLVED BY THE INVENTION

The problem of the present invention is to provide a polymer capable of improving the impact resistance as a modifier while maintaining high flame retardance and heat resistance of a thermoplastic resin, particularly a polycarbonate resin, and a thermoplastic resin composition using the same.

### SOLUTIONS TO THE PROBLEMS

The present inventors have found that by using a rubber graft copolymer copolymerized with a phosphazene compound having a polymerizable functional group and other monomer, the impact resistance can be improved while maintaining the flame retardance and heat resistance of the polycarbonate resin at high level.

Specifically, the gist of the present invention is as follows:
[1] A rubber graft copolymer comprising a rubber polymer part and a graft polymer part, wherein the rubber graft copolymer comprises an essential constituent unit derived from a phosphazene derivative having a polymerizable functional group.
[2] The rubber graft copolymer according to [1], wherein the rubber graft copolymer has a core-shell structure, and the rubber polymer part is the core part and the graft polymer part is the shell part.
[3] The rubber graft copolymer according to [1] or [2], wherein the rubber polymer part comprises an essential constituent unit derived from a phosphazene derivative having a polymerizable functional group.
[4] The rubber graft copolymer according to any one of [1] to [3], wherein the rubber graft copolymer comprises an essential constituent unit derived from a phosphazene derivative having an acryloyl group, a methacryloyl group, a vinyl group, or an allyl group as the polymerizable functional group.
[5] The rubber graft copolymer according to any one of [1] to [4], wherein the rubber polymer part is prepared by polymerizing a monomer mixture containing (a-1) 5 to 40 parts by weight of the phosphazene derivative having a polymerizable functional group, (a-2) 60 to 95 parts by weight of butadiene and/or an acrylic acid alkyl ester monomer, (a-3) 0 to 50 parts by weight of an aromatic vinyl monomer, (a-4) 0 to 5 parts by weight of a multifunctional monomer, and (a-5) 0 to 20 parts by weight of other vinyl monomer, based on 100 parts by weight of the rubber polymer part.
[6] The rubber graft copolymer according to any one of [1] to [5], wherein the rubber polymer part is prepared by polymerizing a monomer mixture containing (a-1) 10 to 20 parts by weight of the phosphazene derivative having a polymerizable functional group, (a-2) 60 to 89 parts by weight of butadiene, (a-3) 1 to 20 parts by weight of styrene, (a-4) 0 to 5 parts by weight of a multifunctional monomer, and (a-5) 0 to 10 parts by weight of other vinyl monomer, based on 100 parts by weight of the rubber polymer part.
[7] The rubber graft copolymer according to any one of [1] to [6], wherein the graft polymer part is prepared by polymerizing a monomer mixture containing (b-1) 5 to 70 parts by weight of the phosphazene derivative having a polymerizable functional group, (b-2) 30 to 95 parts by weight of a methacrylic acid alkyl ester monomer, (b-3) 0 to 60 parts by weight of an acrylic acid alkyl ester monomer, (b-4) 0 to 90 parts by weight of an aromatic vinyl monomer, and (b-5) 0 to 25 parts by weight of a cyanide vinyl monomer, and (b-6) 0 to 20 parts by weight of other vinyl monomer, based on 100 parts by weight of the graft polymer part.
[8] The rubber graft copolymer according to any one of [1] to [7], wherein the graft polymer part is prepared by polymerizing a monomer mixture containing (b-1) 50 to 69 parts by weight of the phosphazene derivative having a polymerizable functional group, (b-2) 30 to 69 parts by weight of methylmethacrylate, (b-3) 1 to 20 parts by weight of butylacrylate, and (b-6) 0 to 10 parts by weight of other vinyl monomer, based on 100 parts by weight of the graft polymer part.
[9] The rubber graft copolymer according to any one of [1] to [8], wherein the unit derived from the phosphazene derivative having a polymerizable functional group is contained in an amount of 5 to 20 % by weight, based on 100 % by weight of the rubber graft copolymer.
[10] The rubber graft copolymer according to any one of [1] to [9], wherein the rubber graft copolymer has the volume average particle diameter of not less than 50 nm and not more than 500 nm.
[11] A thermoplastic resin composition comprising one or two or more resins selected from the group consisting of polycarbonate resin, aliphatic polyester resin, aromatic polyester resin, and poly(meth)acrylate resin, and the rubber graft copolymer according to any one of [1] to [10].
[12] A thermoplastic resin composition comprising one or more resins comprising polycarbonate resin and the rubber graft copolymer according to any one of [1] to [10].
[13] The thermoplastic resin composition according to [11] or [12], wherein the rubber graft copolymer is contained in an amount of not less than 1 part by weight and not more than 60 parts by weight, based on 100 parts by weight of the resin.
[14] The thermoplastic resin composition according to any one of [11] to [13], wherein an Izod impact strength at 23 °C measured by ASTM D256 is not less than 60 kJ/m², the deflection temperature under load measured by ASTM D648 is more than 120 °C, and the flame retardance measured by UL94 is V-1 or V-0.

### EFFECTS OF THE INVENTION

According to the present invention, effects of improving the impact resistance while maintaining the flame retardance and heat resistance of a thermoplastic resin, particularly a polycarbonate resin at high level can be exhibited.

### MODES FOR CARRYING OUT THE INVENTION

### 1. Rubber graft copolymer

The rubber graft copolymer of the present invention is a rubber graft copolymer comprising a rubber polymer part and a graft polymer part, and comprises an essential constituent unit derived from a phosphazene derivative having a polymerizable functional group. By introducing the phosphazene derivative having a polymerizable functional group to the rubber graft copolymer, the balance between the impact resistance and the flame retardance can be improved compared to that of conventional graft copolymers.

The unit derived from the phosphazene derivative having a polymerizable functional group is preferably contained in one or both of a rubber polymer part and a graft polymer part as set forth below, more preferably contained in a rubber polymer part in the view of higher impact resistance and flame retardance.

In the present invention, the unit derived from the phosphazene derivative having a polymerizable functional group means a structural unit derived from the phosphazene derivative contained in a polymer prepared by using as a monomer the phophazene derivative having a polymerizable functional group as set forth below.

The rubber graft copolymer of the present invention preferably has a core-shell structure, and the rubber polymer part is the core part and the graft polymer part is the shell part. Such a rubber graft copolymer may be obtained by polymerizing methylmethacrylate monomer and the like as the graft polymer part under the presence of a polymer mixture of (1) a polymer polymerized with the phosphazene derivative having a polymerizable functional group and a polymer polymerized with butadiene as a main component and a polymer polymerized with styrene as a main component, or (2) a polymer polymerized with the phosphazene derivative having a polymerizable functional group and a polymer polymerized with an acrylic acid ester monomer as a main component as the rubber polymer part.

### 1-1. Rubber polymer part

The rubber polymer part of the rubber graft copolymer of the present invention includes butadiene rubber polymer, acrylic rubber polymer and the like. The butadiene rubber polymer or the acrylic rubber polymer has, for example, Tg of 20 °C or less (butyl acrylate has Tg of 14 °C) or Tg of 0 °C or less (butadiene has Tg of -85 °C) in the view of excellent impact resistance at room temperature or lower temperature.

In the present invention, the rubber polymer part may contain an essential constituent unit derived from the phosphazene derivative having a polymerizable functional group in the view of the improvement of the heat resistance in addition to the impact resistance.

The rubber polymer part is suitably prepared by polymerizing a monomer mixture containing butadiene or an acrylic acid alkyl ester monomer, and a phosphazene derivative (monomer) having a polymerizable functional group, if necessary an aromatic vinyl monomer, and a multifunctional monomer according to conventional methods.

The rubber polymer part is preferably prepared by polymerizing a monomer mixture containing (a-1) 5 to 40 parts by weight of the phosphazene derivative having a polymerizable functional group, (a-2) 60 to 95 parts by weight of butadiene and/or an acrylic acid alkyl ester monomer, (a-3) 0 to 50 parts by weight of an aromatic vinyl monomer, (a-4) 0 to 5 parts by weight of a multifunctional monomer, and (a-5) 0 to 20 parts by weight of other vinyl monomer, based on 100 parts by weight of the rubber polymer part.

The rubber polymer part is more preferably prepared by polymerizing a monomer mixture containing (a-1) 10 to 20 parts by weight of the phosphazene derivative having a polymerizable functional group, (a-2) 60 to 89 parts by weight of butadiene and/or an acrylic acid alkyl ester monomer (further preferably butadiene), (a-3) 1 to 20 parts by weight of an aromatic vinyl monomer (further preferably styrene), (a-4) 0 to 5 parts by weight of a multifunctional monomer, and (a-5) 0 to 10 parts by weight of other vinyl monomer, based on 100 parts by weight of the rubber polymer part.

When the phosphazene derivative having a polymerizable functional group is not used in the rubber polymer part and is used in the graft polymer part, the rubber polymer part is preferably prepared by polymerizing a monomer mixture containing (a-2) 60 to 95 parts by weight of butadiene and/or an acrylic acid alkyl ester monomer, (a-3) 0 to 50 parts by weight of an aromatic vinyl monomer, (a-4) 0 to 5 parts by weight of a multifunctional monomer, and (a-5) 0 to 20 parts by weight of other vinyl monomer, based on 100 parts by weight of the rubber polymer part.

The amount of the phosphazene derivative having a polymerizable functional group is, for example, not less than 5 parts by weight and not more than 25 parts by weight, and preferably not less than 10 parts by weight and not more than 20 parts by weight per 100 parts by weight of the rubber polymer part.

The phosphazene derivative may be a phosphazene having - R₂P=N- structure. The phosphazene derivative is preferably (1) mono-phosphazene represented by R₃P=NR', (2) cyclodiphosphazene represented by -(R₃P-NR')₂- or cyclotriphosphazene represented by -(N=PR₂)₃-, or polyphosphazene represented by -(N=PR₂)ₙ-. In compounds having the formula (1) to (3), one of R₂, R₃, and R' contains an aliphatic hydrocarbon group or an aromatic hydrocarbon group having an ethylenically unsaturated bond, n is the integer of two or more. The phosphazene derivative represented by the formula (2) has, for example, a ring structure, and preferably has 4-membered ring or 6-membered ring. The phosphazene represented by the formula (3) has, for example, a linear structure, and preferably form a linear polymer. In the present invention, the phosphazene derivative represented by the formula (1) to (3) is preferably contained in the rubber graft copolymer as an essential constituent unit, and the phosphazene derivative represented by the formula (2) is more preferably contained in the rubber graft copolymer as an essential constituent unit.

The phosphazene derivative having a polymerizable functional group (a-1) includes a phosphazene having an aliphatic hydrocarbon group or an aromatic hydrocarbon group having an ethylenically unsaturated bond, a compound in which the phosphazene is substituted with the substituent and the like. The aliphatic hydrocarbon group includes alkyl groups such as methyl group, ethyl group, n-propyl group, isopropyl group, n-butyl group, sec-butyl group, tert-butyl group, n-pentyl group, n-hexyl group, n-heptyl group, and n-octyl group.

The aromatic hydrocarbon group includes aryl groups such as phenyl group, methylphenyl group, dimethylphenyl group, trimethylphenyl group, ethylphenyl group, propylphenyl group, butylphenyl group, naphtyl group; aralkyl groups such as benzyl group, diphenylmethyl group, and phenylethyl group.

The substituent includes alkoxy groups such as methoxy group, ethoxy group, propoxy group, butoxy group, methoxyethoxy group, methoxyethoxy ethoxy group; phenoxy groups; alkyl groups such as methyl group, ethyl group, propyl group, butyl group, pentyl group; carboxyl groups; acyl groups such as formyl group, acetyl group, and propionyl group; aryl groups such as tolyl group, and naphtyl group; halogen elements such as chloride, fluoride, and bromine. All of the substituents may be the same kinds of substituent, and some of all of the substituents may be different kinds of substituent.

The polymerizable functional group preferably contains the aliphatic hydrocarbon group or the aromatic hydrocarbon group having an ethylenically unsaturated bond, or preferably contains an acryloyl group, a methacryloyl group, a vinyl group, or an allyl group. Particularly, the phosphazene derivative having an acryloyl group, a methacryloyl group, a vinyl group, or an allyl group as the polymerizable functional group (for example, a functional group having an ethylenically unsaturated bond) can be used suitably. The phosphazene derivative have, for example, at least one polymerizable functional group, preferably at least one (meth)acryloyl group, and more preferably at least one methacryloyl group. At least one polymerizable functional group is at terminal of the phosphazene derivative in the view of the formation of the polymer. In the present invention, the phosphazene derivative having a polymerizable functional group is preferably a phosphazene having at least one acryloyl group or methacryloyl group and a ring structure, and more preferably a phosphazene having at least one methacryloyl group and a ring structure. The phosphazene derivatives may be used individually or in the combination of two or more compounds. According to the phosphazene derivative, the cured product of the thermoplastic resin composition can satisfy the impact resistance, the heat resistance, and the flame retardance.

For example, the phosphazene derivative can be synthesized as follows. The phosphazene derivative of the above formula (1) can be synthesized by reacting trialkyldichlorophosphorane with a primary amine, or reacting tertiary phosphine with azide. The phosphazene derivative of the above formula (2) can be synthesized by reacting hexahaloganatedcyclotriphosphazene with an organic salt under the presence of at least one of quaternary ammonium salt and quaternary ammonium halide in a non-water soluble solvent. The phosphazene derivative of the above formula (3) can be synthesized by reacting a phosphazene having a hydroxyl group with (meth)acrylic acid, (meth)acrylic acid halide, or (meth)acrylic anhydride under the presence of an organic solvent such as benzene or toluene, and the deoxidizing agent such as triethylamine or pyridine.

Butadiene and/or an acrylic acid alkyl ester monomer (a-2) include butadiene; an acrylic acid alkyl ester monomer such as methylacrylate, ethylacrylate, butylacrylate, and 2-ethylhexylacrylate. These may be used individually or in the combination of two or more compounds. Butadiene and butylacrylate are preferably used in the view of the physical property such as the impact resistance and the availability. Butadiene is more preferably used in the view of the flame retardance.

The aromatic vinyl monomer (a-3) includes an aromatic vinyl monomer such as styrene, α-methyl styrene, o-methyl styrene, m-methyl styrene, p-methyl styrene, t-butyl styrene, α-methyl vinyltoluene, dimethylstyrene, chlorostyrene, dichlorostyrene, bromostyrene, dibromostyrene, α- or β-vinylnaphthalene. These may be used separately or in the combination of two or more components.

As the multifunctional monomer (a-4), an aromatic polyvinyl compound such as divinyl benzene, and divinyl naphthalene; allylmethacrylate, allylacrylate, vinylmethacrylate, vinylacrylate, bisacrylic acid anhydride, bismethacrylic acid anhydride; an alkylene glycol diacrylate such as ethylene glycol diacrylate, diethylene glycol diacrylate, triethylene glycol diacrylate, polyethylene glycol diacrylate, propylene glycol diacrylate, dipropylene glycol diacrylate, tripropylene glycol diacrylate, polypropylene glycol diacrylate, butylene glycol diacrylate, dibutylene glycol diacrylate, tributylene glycol diacrylate, polybutylene glycol diacrylate; an alkylene glycol dimethacrylate such as ethylene glycol dimethacrylate, diethylene glycol dimethacrylate, triethylene glycol dimethacrylate, polyethylene glycol dimethacrylate, propylene glycol dimethacrylate, dipropylene glycol dimethacrylate, tripropylene glycol dimethacrylate, polypropylene glycol dimethacrylate, butylene glycol dimethacrylate, dibutylene glycol dimethacrylate, tributylene glycol dimethacrylate, polybutylene glycol dimethacrylate; a dicarboxylic acid divinyl ester such as trimethylolpropanetriacrylate, pentaerythritoltetraacrylate, trimethylolpropanetrimethacrylate, pentaerythritoltetramethacrylate, triallylcyanurate, triallylisocyanurate, divinylphthalate, divinylmaleate, divinyladipate; a dicarboxylic diallyl ester such as diallylphthalate, diallylmaleate, diallyladipate can be used appropriately. These may be used separately or in the combination of two or more components.

Other vinyl monomer (a-5) includes a vinyl monomer such as a cyanide vinyl monomer such as acrylonitrile, methacrylonitrile; an acrylate having an epoxy group such as a glycidyl group; an acrylate having an alkyl group of 1 to 22 of carbon atoms and a hydroxyl group such as 2-hydroxyethylacrylate, 4-hydroxybutylacrylate; an acrylate having an alkyl group of 1 to 22 of carbon atoms and an alkoxy group such as methoxymethylacrylate,methoxyethylacrylate, ethoxymethylacrylate, ethoxyethylacrylate; a methacrylate having an epoxy group such as a glycidyl group; a methacrylate having an alkyl group of 1 to 22 of carbon atoms and a hydroxyl group such as 2-hydroxyethylmethacrylate, 4-hydroxybutylmethacrylate; a methacrylate having an alkyl group of 1 to 22 of carbon atoms and an alkoxy group such as methoxymethylmethacrylate, methoxyethylmethacrylate, ethoxymethylmethacrylate, ethoxyethylmethacrylate. These may be used individually or in the combination of two or more components.

The rubber polymer part can be prepared by adding a first component containing a given monomer (for example, a component for the inner layer of the rubber polymer part) to a reaction system, polymerizing these using suspension polymerization, emulsion polymerization and the like to obtain a polymer polymerized with the first component, then adding a second component containing a given monomer (for example, a component for the outer layer of the rubber polymer part) to the reaction system, and polymerizing these. Thus, the rubber polymer part can be prepared by polymerizing a polymer composed of the second component under the presence of the polymer composed of the first component. The rubber polymer part may be polymerized with a third component containing a given monomer and the like if necessary, with multiple times.

### 1-2. Graft polymer part

The graft polymer part is a polymer polymerized with the graft component on the rubber polymer part. The graft polymer part is preferably prepared by polymerizing a monomer mixture containing (b-1) 5 to 70 parts by weight of the phosphazene derivative having a polymerizable functional group , (b-2) 30 to 95 parts by weight of a methacrylic acid alkyl ester monomer, (b-3) 0 to 60 parts by weight of an acrylic acid alkyl ester monomer, (b-4) 0 to 90 parts by weight of an aromatic vinyl monomer, (b-5) 0 to 25 parts by weight of a cyanide vinyl monomer, and (b-6) 0 to 20 parts by weight of other vinyl monomer, based on 100 parts by weight of the graft polymer part.

The graft polymer part is more preferably prepared by polymerizing a monomer mixture containing (b-1) 50 to 69 parts by weight of the phosphazene derivative having a polymerizable functional group, (b-2) 30 to 69 parts by weight of a methacrylic acid alkyl ester monomer (preferably methylmethacrylate), (b-3) 1 to 20 parts by weight of an acrylic acid alkyl ester monomer (preferably butylacrylate), and (b-6) 0 to 10 parts by weight of other vinyl monomer, based on 100 parts by weight of the graft polymer part.

When the phosphazene derivative having a polymerizable functional group is used in the rubber polymer part and is not used in the graft polymer part, the graft polymer part is preferably prepared by polymerizing a monomer mixture containing (b-2) 50 to 95 parts by weight of a methacrylic acid alkyl ester monomer, (b-3) 5 to 50 parts of an acrylic acid alkyl ester monomer, (b-4) 0 to 90 parts by weight of an aromatic vinyl monomer, (b-5) 0 to 25 parts by weight of a cyanide vinyl monomer, and (b-6) 0 to 20 parts by weight of other vinyl monomer, based on 100 parts by weight of the graft polymer part.

The phosphazene derivative having a polymerizable functional group (a-1) or the phosphazene derivative having a polymerizable functional group (b-1) may be introduced in one or both of the rubber polymer part and the graft polymer part.

As the phosphazene derivative having a polymerizable functional group (b-1), a phosphazene derivative having an acryloyl group, a methacryloyl group, a vinyl group, or an allyl group as a polymerizable functional group can be used appropriately. These may be used individually or in the combination of two or more kinds.

As the methacrylic acid alkyl ester monomer (b-2), methylmethacrylate, ethylmethacrylate, propylmethacrylate, butylmethacrylate can be used appropriately. These may be used individually or in the combination of two or more kinds.

As the acrylic acid alkyl ester monomer (b-3), methylacrylate, ethylacrylate, propylacrylate, butylacrylate can be used appropriately. These may be used individually or in the combination of two or more kinds.

The aromatic vinyl monomer (b-4) includes an aromatic vinyl monomer such as styrene, α-methylstyrene, o-methylstyrene, m-methylstyrene, p-methylstyrene, t-butylstyrene, α-methylvinyltoluene, dimethylstyrene, chlorostyrene, dichlorostyrene, bromostyrene, dibromostyrene, α- or β-vinylnaphthalene. These may be used individually or in the combination of two or more kinds.

As the cyanide vinyl monomer (b-5), a cyanide vinyl monomer such as acrylonitrile, methacrylonitrile can be used appropriately. These may be used individually or in the combination of two or more kinds.

Other vinyl monomer (a-6) includes a vinyl monomer such as an acrylate having an epoxy group such as a glycidyl group; an acrylate having an alkyl group of 1 to 22 of carbon atoms and a hydroxyl group such as 2-hydroxyethylacrylate, 4-hydroxybutylacrylate; an acrylate having an alkyl group of 1 to 22 of carbon atoms and an alkoxy group such as methoxymethylacrylate, methoxyethylacrylate, ethoxymethylacrylate, ethoxyethylacrylate; a methacrylate having an epoxy group such as a glycidyl group; a methacrylate having an alkyl group of 1 to 22 of carbon atoms and a hydroxyl group such as 2-hydroxyethylmethacrylate, 4-hydroxybutylmethacrylate; a methacrylate having an alkyl group of 1 to 22 of carbon atoms and an alkoxy group such as methoxymethylmethacrylate, methoxyethylmethacrylate, ethoxymethylmethacrylate, ethoxyethylmethacrylate. These may be used individually or in the combination of two or more kinds.

In the case where these monomers are selected, the kinds of the thermoplastic resin to be modified by compounding the resulting rubber graft copolymer may be considered, and two or more thermoplastic resins may be combined in optional mixing ratio in the view of the compatibility between the rubber graft copolymer and the thermoplastic resin, refractive index of the thermoplastic resin composition after compounding and the like.

Further, the graft polymer part preferably has one or two or more kinds of reactive groups selected from an epoxy group, a hydroxyl group, a carboxyl group, an alkoxy group, an isocyanate group, an acid anhydride group, and an acid chloride group. When the graft polymer part has the reactive group, the impact resistance can be further improved compared with the case where the rubber graft copolymer having no reactive group is used. The reactive group may be contained in a monomer.

The amount used of the phosphazene derivative having a polymerizable functional group is, for example, not less than 5 parts by weight and not more than 20 parts by weight, and preferably not less than 8 parts by weight and not more than 17 parts by weight, based on 100 parts by weight of the graft polymer part.

### 1-3. Rubber graft copolymer

The rubber graft copolymer of the present invention suitably has a core shell structure, and the rubber polymer part is a core part and the graft polymer part is a shell part. The rubber graft copolymer can improve the balance between the impact resistance and the flame retardance at high level in the case where the rubber graft copolymer is mixed with the thermoplastic resin to prepare a molded product.

The unit derived from the phosphazene derivative having a polymerizable functional group is contained in preferably an amount of 5 to 20 % by weight, more preferably 7 to 18 % by weight, further preferably 9 to 16 % by weight, based on 100 % by weight of the rubber graft copolymer. In the case where the amount of the unit derived from the phosphazene derivative is large, the impact resistance may be lowered. In the case where the amount of the unit derived from the phosphazene derivative is small, the flame retardance cannot be improved in some cases.

In the rubber graft copolymer (impact resistant modifier), the amount of the rubber polymer part is preferably not less than 60 parts by weight and not more than 85 parts by weight, more preferably not less than 70 parts by weight and not more than 80 parts by weight, based on 100 parts by weight of the rubber graft copolymer. The amount of the graft polymer part is preferably not less than 15 parts by weight and not more than 40 parts by weight, more preferably not less than 20 parts by weight and not more than 30 parts by weight, based on 100 parts by weight of the rubber graft copolymer. When the ratio of the rubber polymer part is high, Tg of the whole rubber graft copolymer can be lowered. When the ratio of the graft polymer part is lower, the rubber graft copolymer can be successfully dispersed in the thermoplastic resin.

The rubber graft copolymer has the volume average particle diameter of preferably not less than 50 nm and not more than 500 nm, more preferably not less than 100 nm and not more than 450 nm, and further preferably not less than 150 nm and not more than 350 nm in the view of impact properties and the appearance of the molded product. When the rubber graft copolymer has the volume average particle diameter of more than 500 nm, the appearance property of the molded product from the resulting thermoplastic resin composition is insufficient in some cases.

As a method for preparing the rubber graft copolymer, any of bulk polymerization, liquid polymerization, suspension polymerization, and emulsion polymerization can be adopted. The emulsion polymerization is preferable, and the emulsion graft polymerization is more preferable. Concretely, the method includes a method for preparing the rubber graft copolymer comprising the steps of adding a latex to a reactor equipped with stirrer, further adding a vinyl monomer, a polymerizable initiator, and water thereto, if necessary, a chain transfer agent and a redox agent, and heating these with stirring.

The kinds of the polymerizable initiator, the chain transfer agent and the redox agent used are not limited particularly, and the known those can be used. A method for adding each of raw materials to a reactor also is not limited particularly, the components may be added in batch or in a divided part before the polymerization. In addition, the graft polymerization may be carried out at one or two or more stages, and the composition of the monomers at each stage may be the same or different. The monomer (s) may be added in batch or continuously or in the combination of these.

In the case of adopting emulsion-polymerization, as known initiators, thermal decomposition initiator such as 2,2'-azobisisobutylonitrile, hydrogen peroxide, potassium persulphate, ammonium persulfate can be used.

In addition, redox type initiators of peroxides such as organic peroxides (e.g. t-butylperoxy isopropyl carbonate, p-menthane hydroperoxide, cumene hydroperoxide, dicumyl peroxide, t- butyl hydroperoxide, di-t-butyl peroxide, t-hexyl peroxide, etc.) and inorganic peroxides (e.g. hydrogen peroxide, potassium persulfate, ammonium persulfate, etc.) in combination with reducing agents (e.g. sodium formaldehyde sulfoxylate, glucose, etc.) as needed and transition metal salts (e.g. ferrous sulfate, etc.) as needed, chelating agents (e.g. disodium ethylenediaminetetraacetate, etc.) as needed, or further phosphorus based flame retardant (e.g. sodium pyrophosphate, etc.) as needed can also be used.

In the case of polymerization using a redox type initiator, it is possible to carry out the polymerization even at a low temperature at which the peroxide does not cause substantially thermal decomposition and to set the polymerization temperature in a wide range, and therefore such a polymerization is preferable. Above all, an aromatic ring containing peroxides such as cumene hydroperoxide, dicumyl peroxide are preferably used as a redox type initiator. The amount of the initiator or the amount of the reducing agent/transition metal salt/chelating agent when a redox-type initiator is used can be used in the range known in the art.

When the rubber graft copolymer used in the present invention is obtained by the emulsion polymerization, after the latex containing the rubber graft copolymer is mixed with a solution containing a metal salt having two or more valences such as calcium chloride, magnesium chloride, magnesium sulfate, aluminum chloride, calcium acetate to coagulate the copolymer, and the heat treatment, dehydration, washing, and drying are carried out according to a known method, so that the rubber graft copolymer can be separated from a aqueous medium (hereinafter referred to as coagulation method).

The metal salt having two or more valences is preferably calcium chloride and magnesium chloride in the view of economic and inexpensive availability and easy handleability. In the case where no inclusion of halogen in a minute amount is desirable from the consideration to the environment, magnesium sulfate can be used suitably as the metal salt having two or more valences.

Also, water-soluble organic solvents such as alcohol such as methanol, ethanol, propanol, and acetone can be added to the latex to precipitate the rubber graft copolymer, thus obtained ones can be separated from the solvent by centrifugation or filtration and the like, and the rubber graft copolymer can be isolated after drying.

Another method can include a method comprising the steps of adding an organic solvent having weak water solubility such as methyl ethyl ketone to the latex containing the rubber graft copolymer used in the present invention, extracting the rubber graft copolymer of the latex to the organic solvent phase, separating the organic solvent phase, mixing with water and the like to precipitate the rubber graft copolymer.

In addition, the latex can be directly powdered by spray drying method. In this case, the obtained powder can be washed with the solvent in the same way as the above-mentioned coagulation method to obtain the similar effects. Calcium chloride, magnesium chloride, magnesium sulfate, aluminum chloride and the like, preferably a solution such as an aqueous solution containing any of these is added to the obtained powder, and, if necessary, re-drying is carried out to obtain the similar effects.

### 2. Thermoplastic resin composition

The rubber graft copolymer of the present invention can be compounded to various thermoplastic resins as the impact resistant modifier. Such thermoplastic resin includes hard, semihard, or soft chloride-containing resins such as polyvinyl chloride resin (PVC), chlorinated polyethylene resin, chlorinated polyvinyl chloride resin, polyvinylidene chloride resin; olefin resins such as polypropylene (PP), polyethylene (PE); styrene resins (St resins) such as polystyrene (PS), high impact polystyrene (HIPS), (meth)acrylate-styrene copolymer (MS), styrene-acrylonitrile copolymer (AS), styrene-maleic anhydride copolymer (SMA), acrylonitrile-butadiene-styrene resin (ABS), acrylatestyrene-acrylonitrile resin (ASA), acrylonitrile-ethylenepropylene rubber-styrene resin (AES); poly(meth)acrylate resins (Ac resins) such as polymethylmethacrylate (PMMA); polycarbonate resins (PC resins); polyamide resins (PA resins); polyester resins (PEs resin) such as polyethylene terephthalate (PET), polybutylene terephthalate (PBT); polylactic acid resin, thermoplastic polyvinylalcohol resin, polybutylene succinate, environment adaptive resins derived from natural raw material or petroleum raw material having biodegradability (generally those referred to as biodegradability resins); engineering plastics such as (modified)polyphenylene ether resins (PPE resins), polyoxymethylene resins (POM resins), polysulfone resins (PSO resins), polyarylate resins (PAr resins), polyphenylene resins (PPS resins), thermoplastic polyurethane resins (PU resins); thermoplastic elastomers (TPE) such as styrene elastomer, olefin elastomer, vinyl chloride elastomer, urethane elastomer, polyester elastomer, polyamide elastomer, fluorinated elastomer, 1,2-polybutadiene, trans 1,4-polyisoprene ; polymer, alloys such as PC resin/St resin alloy such as PC/ABS, PVC resin/St resin alloy such as PVC/ABS, PA resin/St resin alloy such as PA/ABS, PA resin/polyolefin resin alloy such as PA resin/TPE resin alloy, PA/PP, PC resin/PEs resin alloy such as PBT resin/TPE, PC/PBT, olefin resin alloys such as polyolefin resin/TPE, PP/PE, PPE resin alloy such as PPE/HIPS, PPE/PBT, PPE/PA, PVC resin/Ac resin alloy such as PVC/PMMA. These resins may be used separately or in combination of two or more. Among these thermoplastic resins, it is preferable that at least one resin selected from the polycarbonate resin and the polyester resin is used, since effects of the heat stability from the rubber graft copolymer of the present invention are exhibited. Most preferable thermoplastic resin contains the aromatic polycarbonate resin and a resin having (that is, aromatic ring containing resin) having refractive index close to the aromatic polycarbonate resin.

The thermoplastic resin composition of the present invention preferably comprises one or two or more resins selected from the group consisting of polycarbonate resin, aliphatic polyester resin, aromatic polyester resin, and poly(meth)acrylate resin, and the rubber graft copolymer. Particularly, the thermoplastic resin composition comprises more preferably one or more resins containing polycarbonate resin, and the rubber graft copolymer.

Polycarbonate resin may be ones obtained by reacting a phenol compound having two valances with a carbonate diester compound such as phosgene or diphenyl carbonate. Commercially available polycarbonate resins such as TARFLON A2200 (registered trademark) manufactured by Idemitsu Kosan Co., Ltd, and PANLITE L1225WP (registered trademark) manufactured by Teijin Chemicals Ltd., CALIBRE (registered trademark) 200-10 manufactured by Sumitomo Dow Limited, and the like can be used. The phenol having two valence is preferably bis (hydroxyaryl)alkane. The phenol having two valence includes bis(hydroxyphenyl)methane, 1,1-bis(4-hydroxyphenyl)ethane, 1,2-bis(4-hydroxyphenyl)ethane, 2,2-bis(hydroxyphenyl)propane, 2,2-bis(4-hydroxyphenyl-3-methylphenyl)propane, 2,2-bis(4-hydroxy-3,5-dibromophenyl)propane, 2,2-bis (4-hydroxy-3,5-dichlorophenyl)propane, 2,2-bis(hydroxyphenyl)hexafluoropropane and the like. These phenols may be used individually or in the combination of two or more phenols. The carbonate diester compound includes diaryl carbonate such as diphenyl carbonate, and dialkyl carbonate such as dimethylcarbonate and diethylcarbonate.

As the polyester resin, aromatic polyester resins such as polyethylene terephthalate, polybutylene terephtalate, polytrimethylene terephthalate, polyethylenenaphthalate, polybutylene naphthalate; aliphatic polyester resins such as polylactic resin, polyglycolic acid, poly 3-hydroxy butyric acid, poly 4-hydroxy butyric acid, poly 4-hydroxy valeric acid, poly 3-hydroxyhexanoic acid, polycaprolactone, polyethyleneadipate, polyethylenesuccinate, polybutyleneadipate, polybutylenesuccinate can be selected appropriately. As poly(meth)acrylate, polymethylacrylate, polyethylacrylate, polypropylacrylate, polybutylacrylate, polymethylmethacrylate, polyethylmethacrylate, polypropylmethacrylate, polybutylmethacrylate can be used appropriately. These may be used individually or in the combination of two or more compounds.

In the thermoplastic resin composition of the present invention, the rubber graft copolymer is contained in an amount of preferably not less than 1 part by weight and not more than 60 parts by weight, more preferably not less than 1 part by weight and not more than 40 parts by weight, and further preferably not less than 1 part by weight and not more than 20 parts by weight, based on 100 parts by weight of the matrix resin. In such a range, the impact resistance can be given without affecting the decrease of the heat stability of the thermoplastic resin.

If necessary, dyes, pigments, antioxidants, fillers, flame retardants, lubricants, release agents and the like can be compounded in the thermoplastic resin composition of the present invention.

As the pigments or the dyes, known pigments or dyes can be used. The dye includes a natural dye such as madder, indigo, turmeric, safflower, and violet; a synthesized dye such as alizarine, and indigo; a fluorescent dye such as esculin, coumarin derivative, and pyrazoline derivative.

The pigment includes (1) inorganic pigments such as white pigments such as zinc oxide, white lead, lithophone, titanium dioxide, precipitated barium sulfate, and cristobalite powder; red pigments such as red lead and red oxide of iron; yellows pigment such as chrome yellow, zinc yellow (zinc yellow, type 1, zinc yellow, type 2); blue pigments such as ultramarine blue, prussian blue (potassium ferricyanide) ; black pigment such as carbon black ; (2) organic pigments such as polycyclic pigments such as azo pigments such as benzidine yellow, and brilliant carmine; yellow pigments such as isoindolinone, quinophthalone, isoindoline, anthraquinone, anthrone, and xanthene; orange pigments such as diketopyrrolopyrrole, perylene, anthraquinone (anthrone), perynone, quinacridone, and indigoid; red pigments such as anthraquinone, quinacridone, diketopyrrolopyrrole, perylene, perynone, and indigoid; purple pigments such as dioxadine, quinacridone, perylene, indigoid, anthraquinone, and xanthene; blue pigments such as phthalocyanine, anthraquinone, and indigoid; green pigments such as phthalocyanine, azomethine, and perylene.

These pigments or dyes may be used individually or in the combination of two or more kinds.

As antioxidant, known antioxidants can be used. The antioxidant includes hindered phenol antioxidants and phosphite antioxidants. The concrete examples of the hindered phenol antioxidants include pentaerythritoltetrakis[3-(3,5-di-tert-butyl-4-hydroxyphenyl)propionate], octadecyl-3-(3,5-di-tert-butyl-4-hydroxyphenyl)propionate, thiodiethylenebis[3-(3,5-di-tert-butyl-4-hydroxyphenyl)propionate], N,N'-hexane-1,6-diylbis[3-(3,5-di-tert-butyl-4-hydroxyphenylpropionamide)], 2,4-dimethyl-6-(1-methylpentadecyl)phenol, diethyl[[3,5-bis(1,1-dimethylethyl)-4-hydroxyphenyl]methyl]phosphate, 3, 3', 3", 5, 5',5" -hexa-tert-butyl-a,a',a"-(mesitylene-2, 4 ,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1, 3, 5-tris(3,5-di-tert-butyl-4-hydroxybenzyl)-1,3,5-triazine-2,4,6-(1H, 3H, 5H)-trion, 2,6-di-tert-butyl-4-(4,6-bis(octylthio)-1,3,5-triazine-2-ylamino)phenol, 2-[1-(2-hydroxy-3,5-di-tert-pentylphenyl)ethyl]-4,6-di-tert-pentylphenylacrylate and the like. The concrete examples of the phosphite antioxidants include triphenylphosphite, tris(monononylphenyl)phosphite, tris(monononyl/dinonyl phenyl)phosphite, tris(2,4-di-tert-butylphenyl)phosphite, monooctyldiphenylphosphite, dioctylmonophenylphosphite, monodecyldiphenylphosphite, didecylmonophenylphosphite, tridecylphosphite, trilaurylphosphite, tristearylphosphite, distearylpentaerythritol diphosphite, bis(2,4-di-tert-butyl-4-methylphenyl)pentaerythritolphosphite, bis (2,6-di-tert-butylphenyl)octylphosphite, 2,2-methylene bis(4,6-di-tert-butylphenyl)octylphosphite, tetrakis(2,4-di-tert-butylphenyl)-4,4'-biphenylene-di-phosphite, 6-[3-(3-tert-butyl-hydroxy-5-methylphenyl)propoxy]-2,4,8,10-tetra-tert-butylbenzo[d,f][1,3,2]-dioxaphosphepin and the like. These antioxidants may be used individually or in the combination of two or more antioxidants.

As a filler, known fillers can be used. The filler includes a plate-like or grain-like inorganic fillers such as talc, mica, glass flake, glass bead, calcium bicarbonate, titanium oxide; fiber-like fillers such as glass fiber, glass milledfiber, wollastonite, carbon fiber, metal conductive fiber and the like. These fillers may be used individually or in the combination of two or more kinds.

As a flame retardant, known flame retardants can be used. The flame retardant includes a phosphorus based flame retardant, a nitrogen based flame retardant, and a halogen based flame retardant. The phosphorus flame retardant includes organic phosphoric acid ester such as red phosphorus, ammonium polyphosphate, phosphoric acid ester, condensed phosphoric acid ester, phosphorous acid ester, condensed phosphorous acid ester and halogen-substituted aromatic ring compound thereof; halogenated phosphoric acid ester, halogenated condensed phosphoric acid ester, nitrogen-containing phosphoric acid ester, organic phosphonic acid ester; phosphoric acid compounds such as phosphine, phosphine oxide, phosphine salt, phosphazene, phosphoramide, and organic phosphonium salt. The nitrogen based flame retardant includes compounds such as cyanuric acid, isocyanuric acid, melamine, melam, melem, mellon, ammeline, ammelide, melaminecyanurate, triallylcyanurate, trimethallylisocyanurate, 1,3,5-triacryloylhexahydro-S-triazine, 2-ureidomelamine, neopentylglycol melamine borate, benzoguanamine, acetoguanamine, 2-(2H-benzotriazole-2-yl)-4,6-di-tertbutylphenol, 1-cyclohexyloxy-2,2,6,6-tetramethyl-4-octadecylaminopiperidine, urea cyanurate, and allantoin, glycoluril; guanidines such as guanidine, aminoguanidine, cyanguanidine, pentaerythrite guanidine borate, neopentylglycol guanidine borate; or a salt of the guanidines and borate, carbonate, phosphate, nitrate, or sulfate, or adducts thereof, or triallylcyanurate polymer, triallylisocyanurate polymer and the like. The halogen based flame retardant includes tetrabromobisphenol-A, tris(2,3-dibromopropyl)isocyanurate, hexabromocyclodecane, and if necessary, antimony trioxide, and the like. These may be used individually or in the combination of two or more flame retardants.

As a luburicant, known lubricants can be used. The lubricant includes fatty acid ester wax, polyethylene wax, ethylene-vinyl acetate copolymer wax, amide wax and the like. The lubricant (s) may be used individually or in the combination of two or more lubricants.

As the release agents, known release agents can be used. The release agents include monoglyceride silicone oil polyglycerin and the like, a functional group containing polyorganosiloxane such as epoxy group containing polyorganosiloxane and the like.

In the thermoplastic resin composition of the present invention, a dripping inhibitor such as fluororesin (preferably polytetrafluoroethylene (PTFE)) can be compounded in the view of gaining effects of the prevention of a dripping at combustion by test such as UL-94 test. PTFE includes preferably those for forming fiber, those having about 73 % by weight of the fluorine content, or those having 5,000,000 of weight average molecular weight. Concretely, the dripping inhibitor includes product name: polyflon FA-500 (registered trademark) and MPA-FA 100 manufactured by DAIKIN INDUSTRIES, Ltd., product name:PTFE6-J manufactured by Du Pont-Mitsui Fluorochemicals Co., Ltd and the like. Since PTFE has insufficient handling property, PTFE coated with other resin can be used in the case where the handling property is important. Concretely, the PTFE coated with other resin includes product name: METABLEN A-3800 manufactured by Mitsubishi Rayon Co. Ltd (the PTFE content of coated PTFE is 50 % by weight), and product name: Poly TS AD001 manufactured by PIC and the like. When the dripping at combustion is produced, the added amount of PTFE (PTFE component of coated PTFE in the case of coated PTFE) is, for example, 0.1 to 2 parts by weight, preferably not more than 1 part by weight, and more preferably not more than 0.6 parts by weight per 100 parts by weight of a matrix resin to obtain effects of preventing dripping or obtain the fluidity at molding.

As a flame retardant, the above-mentioned flame retardant can be used. The flame retardant can be contained in an amount of, for example, 1 to 25 parts by weight, based on 100 parts by weight of a matrix resin in the view of improving the flame retardance. In addition, the flame retardant can be contained in an amount of preferably not less than 2 parts by weight, more preferably not less than 2.5 parts by weight, preferably not more than 10 parts by weight, more preferably not more than 5 parts by weight, based on 100 parts by weight of a matrix resin in the view of preventing the decrease of the mechanical properties and the heat resistance while giving sufficient flame retardance.

The method for preparing the thermoplastic resin composition of the present invention is not limited particularly, and a henschel mixer, a tumbler mixer and the like can be used in the mixture of raw materials, kneading machines such as a single-screw or twin-screw extruder, a banbury mixer, a pressurizing kneader, a mixing roll can be used in the melt kneading.

The thermoplastic resin composition of the present invention can be molded by using conventional molding methods used in the molding of the thermoplastic resin composition such as injection molding method, extrusion molding method, blowing molding method, injection press molding method and the like.

After molding the thermoplastic resin composition of the present invention, an Izod impact strength at 23 °C measured by ASTM D256 is not less than 60 kJ/m², preferably not less than 63 kJ/m², and not more than 70 kJ/m².

After molding the thermoplastic resin composition of the present invention, the deflection temperature under load measured by ASTM D648 is, for example, more than 120 °C, and preferably not less than 125 °C and, for example, not more than 140 °C.

After molding the thermoplastic resin composition of the present invention, the flame retardance measured by UL94 is preferably V-1 or V-0.

The thus prepared thermoplastic resin composition of the present invention can be utilized for various applications requiring the impact resistance and the flame retardance, for example, electric and electronic applications such as a personal computer, a liquid crystal display, a projector, a PDA, a printer, a copy machine, a 3D printer, a facsimile, a video camera, a digital camera, a cellular phone (smart phone), a portable audio device, a game machine, a DVD recorder, a microwave oven, a rice cooker; building applications such as a light transmitting plate for road, a lighting window, a carport, a lens for lighting, a cover for lighting, a siding for building, and a door; vehicle applications such as a handle, a shift lever, a vibration absorber for an automobile, and a window, a display, a light, a panel of driving seat for train.

The present application claims the benefit of priority to Japanese Patent Application Number 2013-162658 filed on August 5, 2013. The entire contents of the specification of Japanese Patent Application Number 2013-162658 filed on August 5, 2013 are hereby incorporated by reference.

### EXAMPLES

Next, the present invention will be described in detail with reference to Examples, but the present invention is not limited thereto, and the variation and the modification of the present invention without departing the gist described above and below are all included the technical scope of the present invention. In the following examples, "part(s)" and "%" mean "part (s) by weight" and "% by weight", respectively.

The various properties of Examples and Comparative Examples were determined as follows.

### [Polymerization conversion ratio]

A part of an obtained latex was sampled, precisely weighed, and dried for three minutes using a microwave moisture meter, and then the weight thereof after drying was precisely measured as the weight of solid content. Then, the ratio between the results of precise weighing before and after drying was determined as a solid component content of the latex. Finally, a polymerization conversion ratio was calculated by the following formula 1 using the solid component content.

### (formula 1)

Polymerization conversion ratio (%) = (total weight of prepared raw material x solid component content - total weight of raw materials other than monomers) / weight of prepared monomers x 100

### [Fluidity]

Fluidity was measured using melt Indexer P-101 manufactured by Toyo Seiki Seisaku-Sho, Ltd at 300 °C under load of 1.2 kg according to JIS K7210 and ISO 7391-1.

### [Volume Average Particle Diameter]

The volume average particle diameters of the rubber polymer part and the rubber graft copolymer were measured at conditions of an aqueous latex. The volume average particle diameter (µm) was measured using a Microtrac UPA150 (manufactured by Nikkiso Co., Ltd) as a measure device.

### [Impact resistance]

Izod impact strength (kJ/m²) was measured using a sample with 1/8 inch notch according to ASTM D256.

### [Heat resistance]

Heat resistance was measured under load of 1.80 MPa according to ASTM D648.

### [Flame retardance]

The flame retardance was evaluated in the total seconds of combustion according to UL94 V test. As evaluation of the flame retardance, "V-0" is highest grade, and then the grades of "V-1" and "not-V" are represented in decreasing order.

### [Synthetic Example 1] Synthesis of rubber graft copolymer

### (Production Example 1a) Production of rubber polymer part

A pressure resistant container equipped with stirrer was charged with pure water, disodium ethylenediaminetetraacetate, ferrous sulfate, and sodium polyoxyethylenealkylether phosphate, and the dissolving oxygen was sufficiently removed under the reduced pressure. Further, 75 parts of butadiene, 10 parts of styrene, 15 parts of a phosphazene derivative having a methacryloyl group, sodium formaldehyde sulfoxylate, p-menthane hydroperoxide were added thereto. Then, sodium polyoxyethylenealkylether phosphate was added dropwise to prepare styrene-butadiene-phosphazene rubber latex (1a) having the volume average particle diameter of 150 nm with 98 % by weight of conversion ratio.

### (Production Example 1b) Production of rubber graft copolymer from formation of graft polymer part

As a monomer, 18 parts of methyl methacrylate and 2 parts of butylacrylate were added to the rubber latex (1a) obtained in the above (solid content of about 80 parts).

At the same time as the addition of the monomers, the addition of t-butylhydroperoxide, sodium formaldehyde sulfoxylate was initiated to prepare a rubber graft copolymer latex (1b) having the volume average particle diameter of 160 nm.

To the rubber graft copolymer latex was added octadecyl-3-(3,5-di-tert-butyl-4-hydroxyphenyl)propionate as a phenol antioxidant, the mixture was subjected to coagulation using a calcium chloride solution, washed with water, dehydrated, and dried to prepare powdered rubber graft copolymer (1c).

### [Synthetic Example 2] Synthesis of rubber graft copolymer

### (Production Example 2a) Production of rubber polymer part

A pressure resistant container equipped with stirrer was charged with pure water, disodium ethylenediaminetetraacetate, ferrous sulfate, and sodium polyoxyethylenealkylether phosphate, and the dissolving oxygen was removed. Further, 75 parts of butylacrylate, 10 parts of styrene, 15 parts of a phosphazene derivative having a methacryloyl group, 1 part of allylmethacrylate, sodium formaldehyde sulfoxylate, p-menthane hydroperoxide were added thereto. Then, sodium polyoxyethylenealkylether phosphate was added dropwise to prepare styrene-acryl-phosphazene rubber latex (2a) having the volume average particle diameter of 150 nm with 98 % by weight of conversion ratio.

### (Production Example 2b) Production of rubber graft copolymer from formation of graft polymer part

As a monomer, 18 parts of methyl methacrylate and 2 parts of butylacrylate were added to the rubber latex (2a) obtained in the above (solid content of about 80 parts).

At the same time as the addition of the monomers, the addition of t-butylhydroperoxide, sodium formaldehyde sulfoxylate was initiated to prepare a rubber graft copolymer latex (2b) having the volume average particle diameter of 160 nm.

To the rubber graft copolymer latex was added octadecyl-3-(3,5-di-tert-butyl-4-hydroxyphenyl)propionate as a phenol antioxidant, the mixture was subjected to coagulation using a calcium chloride solution, washed with water, dehydrated, and dried to prepare powdered rubber graft copolymer (2c).

### [Synthetic Example 3] Synthesis of rubber graft copolymer

### (Production Example 3a) Production of rubber polymer part

A pressure resistant container equipped with stirrer was charged with pure water, disodium ethylenediaminetetraacetate, ferrous sulfate, and sodium polyoxyethylenealkylether phosphate, and the dissolving oxygen was removed. Further, 75 parts of butadiene, 25 parts of styrene, sodium formaldehyde sulfoxylate, p-menthane hydroperoxide were added thereto. Then, sodium polyoxyethylenealkylether phosphate was added dropwise to prepare styrene-butadiene rubber latex (3a) having the volume average particle diameter of 150 nm with 98 % by weight of conversion ratio.

### (Production Example 3b) Production of rubber graft copolymer from formation of graft polymer part

As a monomer, 12 parts of a phosphazene derivative having a methacryloyl group, 7.2 parts of methyl methacrylate and 0.8 parts of butylacrylate were added to the rubber latex (3a) obtained in the above (solid content of about 80 parts).

At the same time as the addition of the monomers, the addition of t-butylhydroperoxide, sodium formaldehyde sulfoxylate was initiated to prepare a rubber graft copolymer latex (3b) having the volume average particle diameter of 160 nm.

To the rubber graft copolymer latex was added octadecyl-3-(3,5-di-tert-butyl-4-hydroxyphenyl)propionate as a phenol antioxidant, the mixture was subjected to coagulation using a calcium chloride solution, washed with water, dehydrated, and dried to prepare powdered rubber graft copolymer (3c).

### [Synthetic Example 4] Synthesis of rubber graft copolymer

### (Production Example 4a) Production of rubber polymer part

A pressure resistant container equipped with stirrer was charged with pure water, disodium ethylenediaminetetraacetate, ferrous sulfate, and sodium polyoxyethylenealkylether phosphate, and the dissolving oxygen was removed. Further, 75 parts of butadiene, 10 parts of styrene, 15 parts of a phosphazene, sodium formaldehyde sulfoxylate, p-menthane hydroperoxide were added thereto. Then, sodium polyoxyethylenealkylether phosphate was added dropwise to prepare styrene-butadiene rubber latex (4a) having the volume average particle diameter of 150 nm with 84 % by weight of conversion ratio. The phosphazene was precipitated at the bottom of the pressure resistant container, and the polymerization did not proceed.

### (Production Example 4b) Production of rubber graft copolymer from formation of graft polymer part

As a monomer, 18 parts of methyl methacrylate and 2 parts of butylacrylate were added to the rubber latex (4a) obtained in the above (solid content of about 80 parts).

At the same time as the addition of the monomers, the addition of t-butylhydroperoxide, sodium formaldehyde sulfoxylate was initiated to prepare a rubber graft copolymer latex (4b) having the volume average particle diameter of 160 nm.

To the rubber graft copolymer latex was added octadecyl-3-(3,5-di-tert-butyl-4-hydroxyphenyl)propionate as a phenol antioxidant, the mixture was subjected to coagulation using a calcium chloride solution, washed with water, dehydrated, and dried to prepare powdered rubber graft copolymer (4c).

### (Synthetic Example 5) Synthesis of rubber graft copolymer

### (Production Example 5b) Production of rubber graft copolymer from formation of graft polymer part

As a monomer, 18 parts of methyl methacrylate and 2 parts of butylacrylate were added to the rubber latex (3a) obtained in the above (solid content of about 80 parts).

At the same time as the addition of the monomers, the addition of t-butylhydroperoxide, sodium formaldehyde sulfoxylate was initiated to prepare a rubber graft copolymer latex (5b) having the volume average particle diameter of 160 nm.

To the rubber graft copolymer latex was added octadecyl-3-(3,5-di-tert-butyl-4-hydroxyphenyl)propionate as a phenol antioxidant, the mixture was subjected to coagulation using a calcium chloride solution, washed with water, dehydrated, and dried to prepare powdered rubber graft copolymer (5c).

The thermoplastic resin compositions shown in Table 1 were prepared using the compositions of the resulting rubber graft copolymers (1c) to (5c). The evaluation results are shown in Table 1.

From the results of Table 1, the Comparative Examples 1 to 3 showed insufficient flame retardance and the Comparative Examples 4 and 5 showed insufficient impact resistance. On the contrary, Examples 1 to 6 showed excellent impact resistance, flame retardance, and heat resistance. In addition, as seen from results of Table 1, the thermoplastic resin composition having excellent impact resistance, flame retardance, and heat resistance in the thin molded product can be obtained by copolymerizing a phosphazene derivative in the rubber graft copolymer.

**[Table 1]**

| | | | | Example | | | | | | Comparative Example | | | | |
|---|---|---|---|---|---|---|---|---|---|---|---|---|---|---|
| | | | | 1 | 2 | 3 | 4 | 5 | 6 | 1 | 2 | 3 | 4 | 5 |
| | Rubber graft copolymer | | | 1c | 1c | 2c | 2c | 3c | 3c | 4c | 4c | 4c | 5c | 5c |
| | Rubber polymer part | Butadiene | parts by weight | 60.0 | 60.0 | | | 60.0 | 60.0 | 60.0(70.6) | 60.0(70.6) | 60.0(70.6) | 60.0 | 60.0 |
| | | Butylacrylate | parts by weight | | | 59.2 | 59.2 | | | | | | | |
| | | Phosphazene derivative containing methacryloyl group | parts by weight | 12.0 | 12.0 | 12.0 | 12.0 | | | | | | | |
| | | Styrene | parts by weight | 8.0 | 8.0 | 8.0 | 8.0 | 20.0 | 20.0 | 8.0 (9.4) | 8.0 (9.4) | 8.0 (9.4) | 20.0 | 20.0 |
| | | Allylmethacrylate | parts by weight | | | 0.8 | 0.8 | | | | | | | |
| Composition of Rubber graft copolymer | | Phosphazene | parts by weight | | | | | | | 12.0(0) | 12.0(0) | 12.0(0) | | |
| | Amount of phosphazene derivative containing methacryloyl group per 100 parts by weight of rubber polymer part | | parts by weight | 15.0 | 15.0 | 15.0 | 15.0 | 0.0 | 0.0 | 0.0 | 0.0 | 0.0 | 0.0 | 0.0 |
| | Graft polymer part | Methylmethacrylate | parts by weight | 18.0 | 18.0 | 18.0 | 18.0 | 7.2 | 7.2 | 18.0 | 18.0 | 18.0 | 18.0 | 18.0 |
| | | Butylacrylate | parts by weight | 2.0 | 2.0 | 2.0 | 2.0 | 0.8 | 0.8 | 2.0 | 2.0 | 2.0 | 2.0 | 2.0 |
| | | Phosphazene derivative containing methacryloyl group | parts by weight | | | | | 12.0 | 12.0 | | | | | |
| | Amount of phosphazene derivative containing methacryloyl group per 100 parts by graft polymer part | | parts by weight | 0.0 | 0.0 | 0.0 | 0.0 | 60.0 | 60.0 | 0.0 | 0.0 | 0.0 | 0.0 | 0.0 |
| | Amount of phosphazene derivative containing methacryloyl group per 100 parts by weight of rubber graft copolymer | | % by weight | 12.0 | 12.0 | 12.0 | 12.0 | 12.0 | 12.0 | 0.0 | 0.0 | 0.0 | 0.0 | 0.0 |
| | Weight ratio of rubber polymer part / graft polymer part | | | 80/20 | 80/20 | 80/20 | 80/20 | 80/20 | 80/20 | 80/20 | 80/20 | 80/20 | 80/20 | 80/20 |
| | Polycarbonate | | parts by weight | 100 | 100 | 100 | 100 | 100 | 100 | 100 | 100 | 100 | 100 | 100 |
| | Rubber graft copolymer | 1c | parts by weight | 5 | 5 | | | | | | | | | |
| | | 2c | parts by weight | | | 5 | 5 | | | | | | | |
| | | 3c | parts by weight | | | | | 5 | 5 | | | | | |
| Composition | | 4c | parts by weight | | | | | | | 5 | 5 | 5 | | |
| | | 5c | parts by weight | | | | | | | | | | 5 | 5 |
| | Phosphorous based flame retardant | | parts by weight | 3 | 2.5 | 3 | 2.5 | 4.5 | 4 | 3 | 3 | 2.5 | 4.5 | 4 |
| | Phosphazene | | parts by weight | | | | | | | 0.6 | | | | |
| | Polytetrafluoroethylene | | parts by weight | 0.3 | 0.3 | 0.3 | 0.3 | 0.3 | 0.3 | 0.3 | 0.3 | 0.3 | 0.3 | 0.3 |
| Item | Test method | Test condition | unit | | | | | | | | | | | |
| [Rheology property] | | | | | | | | | | | | | | |
| Melt mass flow rate | JIS K7210, ISO 7391-1 | 300°C, load1.2kgf | g/10min | 12 | 13 | 12 | 13 | 13 | 14 | 13 | 12 | 13 | 15 | 16 |
| [Impact resistance] | | | | | | | | | | | | | | |
| Izod impact strength | ASTM D-256 | 23°C, 1/8inch | kJ/m² | 65 | 66 | 67 | 68 | 61 | 63 | 64 | 65 | 67 | 60 | 61 |
| | | -30°C, 1/8inch | kJ/m² | 22 | 24 | 18 | 19 | 15 | 17 | 24 | 25 | 28 | 16 | 18 |
| [Heat resistance] | | | | | | | | | | | | | | |
| Deflection temperature under load | ASTM D648 | 1.8MPa | °C | 125 | 126 | 125 | 126 | 125 | 126 | 125 | 125 | 126 | 118 | 120 |
| [Flame retardance] | | | | | | | | | | | | | | |
| Combustibility | UL94 | Test sample having thickness of 1.2mm | | v-0 | V-1 | V-0 | V-1 | V-0 | V-1 | Not-V | Not-V | Not-V | V-0 | V-1 |

| | | | | | | | | | | | | | | |
|---|---|---|---|---|---|---|---|---|---|---|---|---|---|---|
| In Comparative Examples 1 to 3, since phosphazene was used in the rubber polymer part and the polymerization did not proceed, the amount of the phosphazene is represented by the amount used and the parenthesis indicates the net amount of the rubber polymer part. | | | | | | | | | | | | | | |

## Claims

1. A rubber graft copolymer comprising a rubber polymer part and a graft polymer part, wherein the rubber graft copolymer comprises an essential constituent unit derived from a phosphazene derivative having a polymerizable functional group.

2. The rubber graft copolymer according to claim 1, wherein the rubber graft copolymer has a core-shell structure, and the rubber polymer part is the core part and the graft polymer part is the shell part.

3. The rubber graft copolymer according to claim 1 or 2, wherein the rubber polymer part comprises an essential constituent unit derived from a phosphazene derivative having a polymerizable functional group.

4. The rubber graft copolymer according to any one of claims 1 to 3, wherein the rubber graft copolymer comprises an essential constituent unit derived from a phosphazene derivative having an acryloyl group, a methacryloyl group, a vinyl group, or an allyl group as the polymerizable functional group.

5. The rubber graft copolymer according to any one of claims 1 to 4, wherein the rubber polymer part is prepared by polymerizing a monomer mixture containing (a-1) 5 to 40 parts by weight of the phosphazene derivative having a polymerizable functional group, (a-2) 60 to 95 parts by weight of butadiene and/or an acrylic acid alkyl ester monomer, (a-3) 0 to 50 parts by weight of an aromatic vinyl monomer, (a-4) 0 to 5 parts by weight of a multifunctional monomer, and (a-5) 0 to 20 parts by weight of other vinyl monomer, based on 100 parts by weight of the rubber polymer part.

6. The rubber graft copolymer according to any one of claims 1 to 5, wherein the rubber polymer part is prepared by polymerizing a monomer mixture containing (a-1) 10 to 20 parts by weight of the phosphazene derivative having a polymerizable functional group, (a-2) 60 to 89 parts by weight of butadiene, (a-3) 1 to 20 parts by weight of styrene, (a-4) 0 to 5 parts by weight of a multifunctional monomer, and (a-5) 0 to 10 parts by weight of other vinyl monomer, based on 100 parts by weight of the rubber polymer part.

7. The rubber graft copolymer according to any one of claims 1 to 6, wherein the graft polymer part is prepared by polymerizing a monomer mixture containing (b-1) 5 to 70 parts by weight of the phosphazene derivative having a polymerizable functional group, (b-2) 30 to 95 parts by weight of a methacrylic acid alkyl ester monomer, (b-3) 0 to 60 parts by weight of an acrylic acid alkyl ester monomer, (b-4) 0 to 90 parts by weight of an aromatic vinyl monomer, and (b-5) 0 to 25 parts by weight of a cyanide vinyl monomer, and (b-6) 0 to 20 parts by weight of other vinyl monomer, based on 100 parts by weight of the graft polymer part.

8. The rubber graft copolymer according to any one of claims 1 to 7, wherein the graft polymer part is prepared by polymerizing a monomer mixture containing (b-1) 50 to 69 parts by weight of the phosphazene derivative having a polymerizable functional group, (b-2) 30 to 69 parts by weight of methylmethacrylate, (b-3) 1 to 20 parts by weight of butylacrylate, and (b-6) 0 to 10 parts by weight of other vinyl monomer, based on 100 parts by weight of the graft polymer part.

9. The rubber graft copolymer according to any one of claims 1 to 8, wherein the unit derived from the phosphazene derivative having a polymerizable functional group is contained in an amount of 5 to 20 % by weight, based on 100 % by weight of the rubber graft copolymer.

10. The rubber graft copolymer according to any one of claims 1 to 9, wherein the rubber graft copolymer has the volume average particle diameter of not less than 50 nm and not more than 500 nm.

11. A thermoplastic resin composition comprising one or two or more resins selected from the group consisting of polycarbonate resin, aliphatic polyester resin, aromatic polyester resin, and poly(meth)acrylate resin, and the rubber graft copolymer according to any one of claims 1 to 10.

12. A thermoplastic resin composition comprising one or more resins comprising polycarbonate resin and the rubber graft copolymer according to any one of claims 1 to 10.

13. The thermoplastic resin composition according to claim 11 or 12, wherein the rubber graft copolymer is contained in an amount of not less than 1 part by weight and not more than 60 parts by weight, based on 100 parts by weight of the resin.

14. The thermoplastic resin composition according to any one of claims 11 to 13, wherein an Izod impact strength at 23 °C measured by ASTM D256 is not less than 60 kJ/m², the deflection temperature under load measured by ASTM D648 is more than 120 °C, and the flame retardance measured by UL94 is V-1 or V-0.
